# EUROPÄISCHE PATENTSCHRIFT

(11) **EP 1 123 853 B1**
(45) Veröffentlichungstag und Bekanntmachung des Hinweises auf die Patenterteilung: **11.08.2004**
(21) Anmeldenummer: 01102538.4
(22) Anmeldetag: 06.02.2001
(51) Int. Cl.: B61H 7/08, B61H 7/04

(54) **Aufhängung einer Magnetschienenbremse**
Suspension of a magnetical rail track brake
Suspension d'un frein magnétique sur rail

(30) Priorität: 11.02.2000 DE 10006195
(43) Veröffentlichungstag der Anmeldung: 16.08.2001
(73) Patentinhaber: DaimlerChrysler AG, 70567 Stuttgart (DE)
(72) Erfinder: Bieker, Guido, Dipl.-Ing., 57399 Kirchhundem (DE); Rother, Eva, Dipl.-Ing., 57250 Netphen (DE)
(74) Vertreter: Akers, Noel James

(56) Entgegenhaltungen:
- DE-A- 19 503 381
- DE-B- 1 151 834
- DE-C- 19 642 984
- FR-A- 2 280 536
- GB-A- 710 809

## Beschreibung

Die Erfindung bezieht sich auf eine Aufhängung einer Magnetschienenbremse gemäß dem Oberbegriff des Anspruchs 1.

Bei Schienenfahrzeugen ist es zur Erhöhung der Bremswirkung allgemein bekannt, neben Rad/Schiene-Bremssystemen (beispielsweise Scheibenbremsen und Klotzbremsen) auch Magnetschienenbremsen vorzusehen, bei denen elektromagnetische Kräfte erzeugt werden, durch die Bremsleisten gegen die Schienen gepreßt werden. Während eines Bremsvorganges erzeugen derartige Magnetschienenbremsen eine elektromagnetische Vertikalkraft durch einen von einer bzw. mehreren Spulen erzeugten und über die Schiene geschlossenen Kraftfluß. Der Eisenweg besteht aus dem Kern, den Schenkeln, den Bremsleisten und der Schiene.

Die Magnetschienenbremse in Tiefaufhängung hat üblicherweise eine Aufhängung (Vertikalführung), die in Querrichtung zwischen Magnetschienenbremse und Drehgestellrahmen ein Querspiel von etwa +/- 8 mm hat. Das Querspiel ermöglicht der Magnetschienenbremse, sich unabhängig von der Spurweite und unabhängig vom Bogenradius stets optimal zur Schiene einzustellen, um damit eine optimale Bremswirkung zu erzielen. Nachteilig dabei ist, daß durch das notwendige Querspiel und die erforderliche Baubreite der Magnetschienenbremse der zur Verfügung stehende Lichtraum überschritten wird, insbesondere durch Pendelbewegungen bei nicht aktiver Magnetschienenbremse. Da das Querspiel begrenzt werden muß, treten bei Ausschöpfung des Querspiels und Anschlag gegen diese Begrenzung stoßartig Kräfte auf, welche die Halterung in hohem Maße beanspruchen und nachteilige hohe Kraft- und Beanspruchungsspitzen hervorrufen.

Würde man zu Lasten der Quereinstellbarkeit die Querführung mit weniger Spiel ausführen, dann würden die Kräfte aus der Querführung des Magneten ansteigen und damit auch die Beanspruchung auf die Halterung. Zusätzlich würden bei zu enger Querführung die Querkräfte, die zwischen Rad und Schiene wirken, nicht über die Radsatzführung, sondern auch über die Halterung der Magnetschienenbremse abgesetzt, was zu einer unzulässigen Beanspruchung der Halterung der Magnetschienenbremse führen würde.

Der Erfindung liegt die Aufgabe zugrunde, eine Aufhängung einer Magnetschienenbremse anzugeben, welche innerhalb des zur Verfügung stehenden Lichtraumes ein genügendes Querspiel ermöglicht.

Diese Aufgabe wird in Verbindung mit den Merkmalen des Oberbegriffes erfindungsgemäß durch die im Anspruch 1 gekennzeichneten Merkmale gelöst.

Die mit der Erfindung erzielbaren Vorteile bestehen insbesondere darin, daß einerseits das zur optimalen Einstellung der Magnetschienenbremse erforderliche Querspiel zwischen Magnetschienenbremse und Drehgestellrahmen zur Verfügung gestellt wird und daß andererseits erhöhte Kraftbeanspruchungen der Halterung-insbesondere hohe Beanspruchungsspitzen bei Ausschöpfung des Querspiels - und eine Überschreitung des zur Verfügung stehenden Lichtraumes zuverlässig verhindert werden.

Vorteilhafte Ausgestaltungen der Erfindung sind in den Unteransprüchen gekennzeichnet.

Weitere Vorteile der vorgeschlagenen Aufhängung einer Magnetschienenbremse ergeben sich aus der nachstehenden Beschreibung.

Die Erfindung wird nachstehend anhand der in der Zeichnung dargestellten Ausführungsbeispiele näher erläutert. Es zeigen:
- Fig. 1: einen Schnitt durch eine Aufhängung einer Magnetschienenbremse (von oben betrachtet),
- Fig. 2: eine seitliche Ansicht eines Abschnittes der Magnetschienenbremse (teilweise geschnitten).

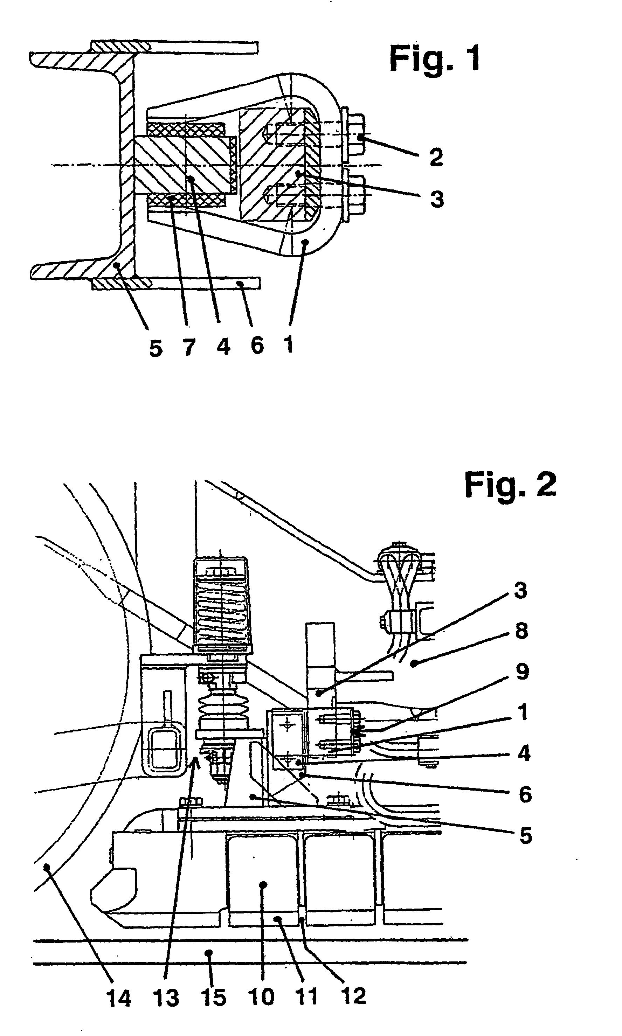

In Fig. 1 ist ein Schnitt durch eine Aufhängung einer Magnetschienenbremse dargestellt. Es ist eine U-förmige Klammer 1 zu erkennen, deren Basisschenkel mit Hilfe von Befestigungsschrauben 2 an einer Halterung 3 des Drehgestellrahmens des Schienenfahrzeuges montiert ist. Die Innenflächen der beiden Seitenschenkel der Klammer 1 greifen über Seitenwandungen eines an einem Befestigungskörper 5 der Magnetschienenbremse montierten Mitnehmers 4. Parallel zu den besagten Seitenwandungen des Mitnehmers 4 ist der Befestigungskörper 5 mit Begrenzungsblechen 6 versehen. Zweckmäßig sind die besagten Seitenwandungen sowie die Stirnwandung des Mitnehmers 4 mit einem Belag 7 versehen, welcher die Reibung zwischen dem Mitnehmer 4 und der Klammer 1 sowie dem Mitnehmer 4 und der Halterung 3 reduziert.

In Fig. 2 ist eine seitliche Ansicht eines Abschnittes der Magnetschienenbremse (teilweise geschnitten) dargestellt. Insbesondere ist die an einem Drehgestellrahmen 8 des Schienenfahrzeuges montierte Vertikalführung 9 der Magnetschienenbremse zu erkennen. Die Vertikalführung 9 wird im wesentlichen durch die über die Halterung 3 am Drehgestellrahmen 8 montierte Klammer 1 gebildet, die den am Befestigungskörper 5 der Magnetschienenbremse montierten Mitnehmer 4 führt. Im durch die beiden Begrenzungsbleche 6 vorgegebenen Bereich läßt die Vertikalführung 9 eine Querbewegung zwischen Halterung 3 und Befestigungskörper 5 zu, wodurch das notwendige Querspiel ermöglicht wird.

Der Befestigungskörper 5 verbindet die eigentliche Magnetschienenbremse nicht nur mit ihrer Vertikalführung 9, sondern auch mit einer Senk/Hubvorrichtung 13 der Magnetschienenbremse. Von der eigentlichen Magnetschienenbremse sind lediglich die magnetisch aktiven Schenkel 10 zu erkennen, während die Spulen und der magnetisch aktive Kern verdeckt sind. Während eines Bremsvorganges drücken die Schenkel 10 über Bremsleisten 11 gegen die Schiene 15. Es sind mehrere, jeweils durch Einschnitte 12 getrennte Schenkel 10 mit Bremsleisten nebeneinander angeordnet. Die Lage eines Rades 14 ist schematisch dargestellt.

Die vorstehend erläuterte Vertikalführung 9 ermöglicht bei seitlich nicht beanspruchter Klammer 1 eine praktisch spielfreie Halterung der Magnetschienenbremse. Die Klammer 1 ist aus Federstahl und so dimensioniert, daß zum einen die Führung bei nicht aktiver Magnetschienenbremse so steif ausgeführt ist, daß Pendelbewegungen zuverlässig verhindert werden, welche zu einer Überschreitung des zur Verfügung stehende Lichtraumes (Profilüberschreitung) führen. Andererseits ist die Klammer 1 so elastisch ausgebildet, daß die notwendige Querfreiheit für die Bogeneinstellbarkeit gegeben ist. Die dabei wirkende Rückstellkraft baut sich vorteilhaft kontinuierlich entsprechend der Federkennlinie auf und führt damit zu einer Reduzierung der Beanspruchung der Bauteile.

Die elastische Klammer 1 verhindert aufgrund der engen Führung und ihrer elastischen Kennlinie und insbesondere im Zusammenwirken mit dem reibungsarmen Belag 7 zuverlässig ein Verkanten des Mitnehmers 4 innerhalb der Führung.

### Bezugszeichenliste

- 1: Klammer
- 2: Befestigungsschraube
- 3: Halterung des Drehgestellrahmens
- 4: Mitnehmer
- 5: Befestigungskörper der Magnetschienenbremse
- 6: Begrenzungsblech
- 7: Belag
- 8: Drehgestellrahmen
- 9: Vertikalführung
- 10: Schenkel der Magnetschienenbremse
- 11: Bremsleisten
- 12: Einschnitte
- 13: Senk/Hubvorrichtung
- 14: Rad
- 15: Schiene

## Patentansprüche

1. Aufhängung einer Magnetschienenbremse mit einer Vertikalführung (9), welche einen an einen Befestigungskörper (5) der Magnetschienenbremse verbundenen Mitnehmer (4) aufweist, der innerhalb einer drehgestellfesten, ein vorgegebenes Querspiel zulassenden Führung gleitet, **dadurch gekennzeichnet, daß** als drehgestellfeste Führung eine elastische, U-förmige Klammer (1) dient, welche den Mitnehmer (4) umgreift.

2. Aufhängung nach Anspruch 1, **dadurch gekennzeichnet, daß** die Seitenwandungen des Mitnehmers (4) einen reibungsarmen Belag (7) aufweisen.

3. Aufhängung nach Anspruch 1 und/oder 2, **dadurch gekennzeichnet, daß** die Querbewegung des Mitnehmers (4) durch Begrenzungsbleche (6) beschränkt ist.

4. Aufhängung nach einem der vorstehenden Ansprüche, **dadurch gekennzeichnet, daß** die Klammer (1) über eine Halterung (3) am Drehgestellrahmen (8) montiert ist.

5. Aufhängung nach einem der vorstehenden Ansprüche, **dadurch gekennzeichnet, daß** die Klammer (1) am Befestigungskörper (5) montiert ist und die Halterung (3) umgreift.

## Claims

1. Suspension for an electromagnetic track brake, having a vertical guide means (9) which has a follower (4) which is connected to an attaching body (5) belonging to the electromagnetic track brake, which follower (4) slides in a guide which is solid with the bogie and permits a preset transverse play, **characterised in that** what acts as the guide solid with the bogie is a U-shaped clip (1) which grasps the follower (4).

2. Suspension according to Claim 1, **characterised in that** the side-walls of the follower (4) have a low-friction covering (7).

3. Suspension according to Claim 1 and/or 2, **characterised in that** the transverse motion of the follower (4) is restricted by limiter plates (6).

4. Suspension according to one of the foregoing claims, **characterised in that** the clip (1) is fitted to the bogie frame (8) via a mounting (3).

5. Suspension according to one of the foregoing claims, **characterised in that** the clip (1) is mounted at the attaching body (5) and fits round the mounting (3).

## Revendications

1. Suspension d'un frein électromagnétique au moyen de patins comportant un guide vertical (9) qui présente un élément entraîneur (4) uni à un corps de fixation (5) du frein électromagnétique muni de patins, lequel glisse sur un guide fixé à un bogie permettant un jeu transversal prédéterminé, **caractérisée en ce que** sur le guide fixé à un bogie se situe un collier (1) élastique en forme de U qui entoure l'élément entraîneur (4).

2. Suspension selon la revendication 1, **caractérisée en ce que** les parois latérales de l'élément entraîneur (4) présentent un revêtement (7) à frottement réduit.

3. Suspension selon la revendication 1 et/ou 2, **caractérisée en ce que** le mouvement transversal de l'élément entraîneur (4) est freiné par des tôles de limitation (6).

4. Suspension selon une des revendications précédentes, **caractérisée en ce que** le collier (1) est monté sur un support (3) sur le châssis du bogie (8).

5. Suspension selon une des revendications précédentes, **caractérisée en ce que** le collier (1) est monté sur le corps de fixation (5) et entoure le support (3).
